(19) Europäisches Patentamt
European Patent Office
Office européen des brevets

(11) **EP 1 668 866 B1**

(12) **EUROPÄISCHE PATENTSCHRIFT**

(45) Veröffentlichungstag und Bekanntmachung des Hinweises auf die Patenterteilung:
**05.11.2008 Patentblatt 2008/45**

(21) Anmeldenummer: **04787136.3**

(22) Anmeldetag: **14.09.2004**

(51) Int Cl.:
*H04L 29/06* (2006.01)     *H04L 29/14* (2006.01)
*H04L 12/24* (2006.01)

(86) Internationale Anmeldenummer:
**PCT/EP2004/052163**

(87) Internationale Veröffentlichungsnummer:
**WO 2005/032094 (07.04.2005 Gazette 2005/14)**

(54) **ÜBERPRÜFUNG DER VERFÜGBARKEIT EINES SERVERS**

VERIFICATION OF THE AVAILABILITY OF A SERVER

VERIFICATION DE LA DISPONIBILITE D'UN SERVEUR

(84) Benannte Vertragsstaaten:
**DE FR GB IT SE**

(30) Priorität: **30.09.2003 DE 10345535**

(43) Veröffentlichungstag der Anmeldung:
**14.06.2006 Patentblatt 2006/24**

(73) Patentinhaber: **SIEMENS AKTIENGESELLSCHAFT**
**80333 München (DE)**

(72) Erfinder: **SCHEERING, Christian**
**33689 Bielefeld (DE)**

(56) Entgegenhaltungen:
**US-A1- 2001 054 158**

• **SENGODAN S: "A GATEKEEPER DISCOVERY MECHANISM FOR H.323 SYSTEMS" PROCEEDINGS OF THE SPIE, SPIE, BELLINGHAM, VA, US, Bd. 3528, 2. November 1998 (1998-11-02), Seiten 319-326, XP009013925 ISSN: 0277-786X**

**Beschreibung**

Die vorliegende Erfindung betrifft ein Verfahren zur Überprüfung der Verfügbarkeit eines Servers, ein Steuerungsprogramm und einen Client für ein verbindungslose Dienste bereitstellendes Netz.

Eine zuverlässige Überprüfung der Verfügbarkeit eines Servers ist insbesondere bei lose gekoppelten Client-Server-Beziehungen in paketorientierten Datennetzen von großer Bedeutung. Erkennt ein Client frühzeitig, daß ein Server überlastet oder ausgefallen ist, so können noch rechtzeitig Gegenmaßnahmen eingeleitet werden, beispielsweise Suche nach einem Alternativ-Server oder Erzeugen von Warnhinweisen. Verfahren zur Überprüfung der Verfügbarkeit eines Servers, zu denen auch im H.323-Standard. Stand 11/2000, Kap. 7.2.2 beschriebene Keep-Alive-Tests zählen, werden angewendet, wenn keine permanente Kommunikationsbeziehung zwischen Client und Server besteht, ein fehlerfreies Bestehen einer solchen Beziehung jedoch Grundlage für eine gewünschte Funktionalität ist, beispielsweise Internet-Telephonie. In paketorientierten Netzen dienen Keep-Alive-Tests beispielsweise dazu, Kommunikationsteilnehmern einen quasi leitungsvermittelnden Charakter hinsichtlich gegenseitiger Erreichbarkeit zu simulieren.

Bei gängigen Keep-Alive-Tests sendet ein Client in zyklischen Zeitabständen Verfügbarkeitsanfragen an einen ausgewählten Server. Wird eine Verfügbarkeitsanfrage durch den Server innerhalb eines vorgebbaren Zeitraums beantwortet, gilt der Server als verfügbar und die Kommunikationsbeziehung daher als aktiv. Nachteilig an dieser Vorgehensweise ist, daß der Server in der Regel durch eine Beantwortung sämtlicher Client-Anfragen erheblich belastet wird.

Der vorliegenden Erfindung liegt daher die Aufgabe zugrunde, ein Verfahren zur Überprüfung der Verfügbarkeit eines Servers, das eine Minimierung der Belastung des Servers durch an ihn gerichtete Verfügbarkeitsanfragen ermöglicht, sowie zur Durchführung des Verfahrens geeignete technische Implementierungen anzugeben.

Diese Aufgabe wird erfindungsgemäß durch ein Verfahren mit den in Anspruch 1, ein Steuerungsprogramm mit den in Anspruch 7 und einen Client mit den in Anspruch 8 angegebenen Merkmalen gelöst. Vorteilhafte Weiterbildungen der vorliegenden Erfindung sind in den abhängigen Ansprüchen angegeben.

Ein wesentlicher Aspekt der vorliegenden Erfindung besteht darin, daß ein Client, der auf eine an einen Server gerichtete Verfügbarkeitsanfrage eine Bestätigungsmeldung vom Server empfangen hat, eine Meldung über die Verfügbarkeit des Servers an weitere Clients übermittelt. Daraufhin unterbinden die vorgebbaren weiteren Clients zumindest für ein vorgebbares Zeitintervall ein Übermitteln einer Verfügbarkeitsanfrage an den Server. Auf diese Weise kann die Belastung des Servers durch Verfügbarkeitsanfragen erheblich reduziert werden, ohne daß dies beispielsweise zu Lasten einer nicht mehr rechtzeitigen Erkennung eines Serverausfalls oder einer Serverüberlastung geht.

Das Dokument US-2001/054158 wird als nächstliegender Stand der Technik angesehen, und offenbart ein Verfahren zur Überprüfung der Verfügbarkeit eines Servers.

Die vorliegende Erfindung wird nachfolgend an einem Ausführungsbeispiel anhand der Zeichnung näher erläutert. Es zeigt

Figur 1 ein Anwendungsumfeld der vorliegenden Erfindung mit zahlreichen Clients und Servern in einem paketorientierten Netz mit mehreren Teilnetzen,

Figur 2 ein Ablaufdiagramm für ein Verfahren zur Überprüfung der Verfügbarkeit eines Servers,

Figur 3 ein Ablaufdiagramm für ein gegenüber Figur 2 modifiziertes Verfahren, bei dem zusätzlich die Verfügbarkeit von Clients durch den Server überprüft wird.

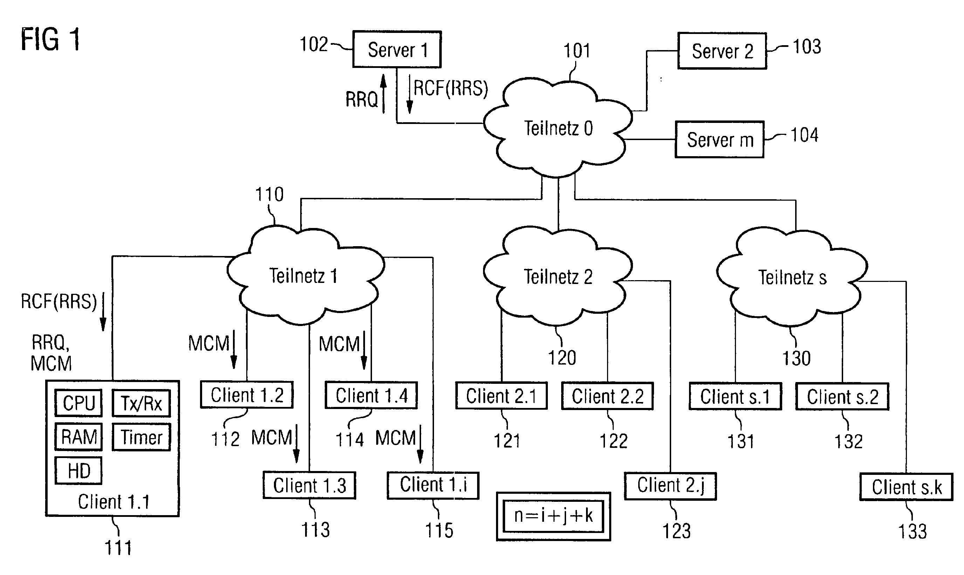

In Figur 1 ist ein Kommunikationssystem dargestellt, das ein paketorientiertes Netz mit mehreren Teilnetzen 101, 110, 120, 130, Server 102 bis 104 und mehrere Clients 111 bis 115, 121 bis 123, 131 bis 133 umfaßt. Die Clients 111 bis 115, 121 bis 123, 131 bis 133 nutzen von den Servern 102 bis 104 angebotene Dienste, beispielsweise Internet-Telefonie.

Bei den Teilnetzen 110, 120, 130 handelt es sich um lokale Subnetze, die jeweils über einen Gatekeeper verfügen. Die Gatekeeper dienen vornehmlich zur Zugangskontrolle und zu Adreßübersetzungsdiensten. Diese Funktionalität der Gatekeeper kann durch Server im paketorientierten Netz übernommen werden.

Zur Nutzung von durch einen Server 102 bis 104 angebotenen Diensten registrieren sich die Clients 111 bis 115, 121 bis 123, 131 bis 133 zunächst am jeweiligen Server. Dabei wird ein Zeitraum spezifiziert, innerhalb dessen eine Registrierung als gültig behandelt wird. Der Ablauf eines Registrierungsverfahrens wird exemplarisch und ohne Beschränkung der Allgemeingültigkeit für den Client 111 dargestellt.

Der Client 111 verfügt über eine zentrale Prozessoreinheit (CPU), einen Arbeitsspeicher (RAM), eine Festplatte zur nichtflüchtigen Speicherung von Daten (HD), einen Netzwerkadapter (Tx/Rx) und eine Zeitsteuerungseinheit (Timer). Einen solchen Aufbau und eine solche Funktionalität können auch die übrigen in Figur 1 dargestellten Clients 112 bis 115, 121 bis 123, 131 bis 133 aufweisen.

Zur Registrierung an einem der Server 102 bis 104 übermittelt der Client 111 eine Meldung mit einer Registrierungsanforderung RRQ an einen Server, der einen gewünschten Dienst bereitstellt. In der Meldung mit der Registrierungsanforderung RRQ wird ein Zeitraum spezifiziert, innerhalb dessen die Registrierung des Clients 111 am ausgewählten Server gültig sein soll. Außerhalb dieses Zeitraums gilt die Registrierung des Clients als ungültig.

Bei Verfügbarkeit antwortet der ausgewählte Server durch eine Meldung mit Registrierungsbestätigung RCF auf die Registrierungsanfrage. In der Meldung mit der Registrierungsbestätigung RCF ebenfalls einen Gültigkeitszeitraum für die Registrierung spezifiziert. Der vom ausgewählten Server bestätigte Gültigkeitszeitraum entspricht entweder dem vom Client 111 angegebenen Zeitraum oder ist kürzer als dieser.

Innerhalb des Gültigkeitszeitraums für die Registrierung kann der Client 111 Verfügbarkeitsanfragen an den ausgewählten Server richten. Derartige Verfügbarkeitsanfragen, die auch als Keep-Alive-Tests bezeichnet werden, werden ebenfalls in Form einer Meldung mit einer Registrierungsanfrage RRQ an den ausgewählten Server übermittelt. Eine im Rahmen eines Keep-Alive-Tests übermittelte Meldung mit Registrierungsanfrage RRQ weist gegenüber gewöhnlichen Meldungen mit Registrierungsanfrage ein gesetztes Keep-Alive-Bit ist.

Entsprechend den ITU-T-Empfehlungen H.225.0, Stand 11/2000, Kapitel 7.9 ist eine verkürzte Meldung mit Registrierungsanfrage für eine "Lightweight Registration" bereits ausreichend. Dabei weist die Meldung mit Registrierungsanfrage lediglich Angaben über eine Registrierungs- und Status-Transportadresse (RAS-Adresse) des Clients, ein gesetztes Keep-Alive-Bit, einen Endpunktidentifikator für den Client, einen Server- bzw. Gatekeeperidentifikator, Berechtigungsmarken (Tokens) für auszuführende Operationen und einen Gültigkeitszeitraum für die Registrierung.

Eine Meldung mit Registrierungsanforderung RRQ, die im Rahmen eines Keep-Alive-Tests an den ausgewählten Server übermittelt wird, kann auch zur Verlängerung des Gültigkeitszeitraums der Registrierung verwendet werden. Dies gilt jedoch nur dann, wenn die Meldung noch innerhalb des Gültigkeitszeitraums der Registrierung vom ausgewählten Server empfangen wird. Daher sollten zur Ermittlung des Endes eines Gültigkeitszeitraums durch einen Client auch Meldungs- und Bearbeitungsverzögerungen berücksichtigt werden. Nach dem Ende des Gültigkeitszeitraums der Registrierung ist zur erneuten Registrierung eine Übermittlung einer oben beschriebenen verkürzten Meldung mit Registrierungsanfrage nicht mehr ausreichend.

Falls die Meldung mit der Registrierungsbestätigung RCF keine Angabe über einen Gültigkeitszeitraum der Registrierung aufweist, wird dies dahingehend gewertet werden, daß der ausgewählte Server keine Keep-Alive-Mechanismen für Verfügbarkeitsanfragen unterstützt. Clients sollten bei Empfang einer solchen Meldung ohne Angabe über einen Gültigkeitszeitraum ein Versenden von Verfügbarkeitsanfragen an den jeweiligen Server unterbinden.

Nach Ablauf der Gültigkeit einer Registrierung kann der ausgewählte Server eine Meldung mit einem entsprechenden Hinweis an den betroffenen Client übermitteln, um diesen über den Ablauf des Gültigkeitszeitraums zu informieren. Dies ist insbesondere bei einem Verlust der Synchronisierung zwischen Zeitsteuerungseinheiten am Client einerseits und am Server andererseits von Vorteil.

Sendet der Client 111 nach dem Ende des Gültigkeitszeitraums der Registrierung eine oben beschrieben verkürzte Meldung mit Registrierungsanfrage RRQ und gesetztem Keep-Alive-Bit an den ausgewählten Server, so wird der Server durch eine Meldung mit Registrierungszurückweisung RRJ reagieren. In einer solchen Meldung kann auch ein Zurückweisungsgrund angegeben sein.

Um eine unnötige Belastung eines Servers 102 bis 104 durch Verfügbarkeitsanfragen von Clients 111 bis 115, 121 bis 123, 131 bis 133 zu vermeiden, informiert ein Client, der eine positive oder eine negative Antwort auf eine Verfügbarkeitsanfrage erhalten hat, mittels einer Multicast-Meldung MCM sämtliche Clients innerhalb desselben Teilnetzes 110, 120, 130 über die Verfügbarkeit des jeweiligen Servers. Durch eine Begrenzung auf dasselbe Teilnetz können außerdem Probleme im Hinblick auf nicht allgemein auflösbare Adressen umgangen werden. Insbesondere wird eine unnötige Netzbelastung durch nichtadressierbare Meldungen verhindert.

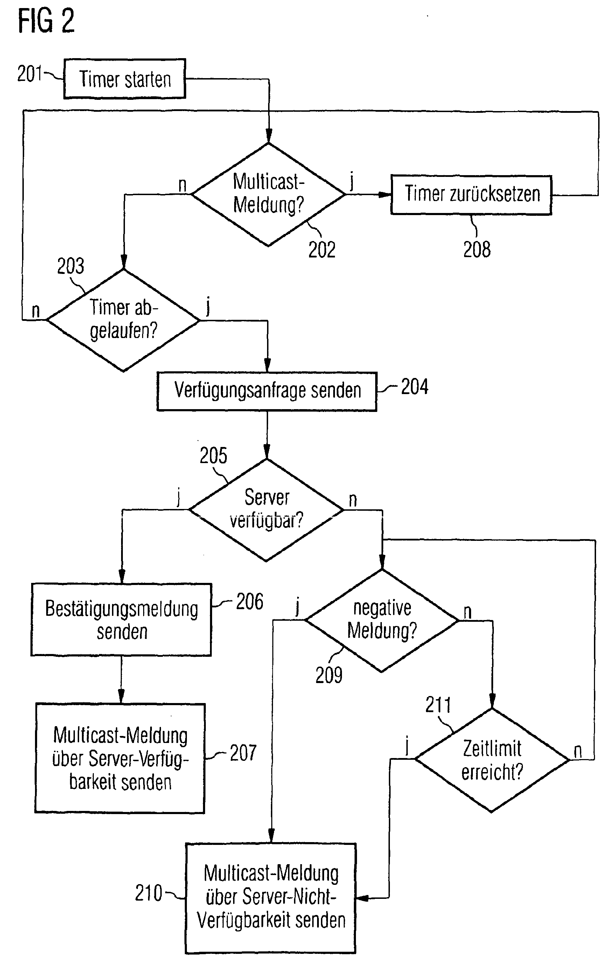

Das in Figur 2 dargestellte Ablaufdiagramm dient zur weiteren Veranschaulichung eines Verfahrens zur Überprüfung der Verfügbarkeit eines Servers in einem paketorientierten Kommunikationsnetz. Ausgangspunkt des Verfahrens ist ein Start eines Timers bzw. eines Zählers einer Zeitsteuerungseinheit eines Clients (Schritt 201). Durch den Timer werden Zeitpunkte festgelegt, zu denen Verfügbarkeitsanfragen des Clients an einen ausgewählten Server übermittelt werden sollen.

Nach dem Start des Timers überwacht der Client den Empfang von Multicast-Meldungen MCM, aus denen sich Aussagen über die Verfügbarkeit eines Servers ergeben (Schritt 202). Empfängt der Client eine solche Multicast-Meldung, so wird der Timer zurückgesetzt(Schritt 208). Dadurch wird eine Übermittlung von Verfügbarkeitsanfragen an den ausgewählten Server für ein vorgebbares Zeitintervall unterbunden.

Sofern keine neue Multicast-Meldung empfangen wurde, wird zusätzlich überprüft, ob der Timer abgelaufen und damit ein Zeitpunkt zum Absetzen einer neuen Verfügbarkeitsanfrage erreicht ist (Schritt 203). Wenn der Timer noch nicht abgelaufen ist, werden weiterhin der Empfang von Multicast-Meldungen und der Ablauf des Timers überprüft. Ist der Timer abgelaufen, wird eine Verfügbarkeitsanfrage an den ausgewählten Server versendet (Schritt 204).

In Schritt 205 wird zumindest implizit die Verfügbarkeit oder Nichtverfügbarkeit des ausgewählten Servers festgestellt. Ist der ausgewählte Server verfügbar, so antwortet dieser durch eine an den anfragenden Client gerichtete Bestätigungsmeldung auf die Verfügbarkeitsanfrage (Schritt 206). Nach Erhalt der Bestätigungsmeldung informiert der anfragende Client sämtliche weiteren Clients innerhalb desselben Teilnetzes über die Verfügbarkeit des ausgewählten Servers mittels einer Multicast-Meldung (Schritt 207). Daraufhin unterbinden die weiteren Clients, welche die Multicast-Meldung empfangen haben, ihrerseits ein Übermitteln von Verfügbarkeitsanfragen an den ausgewählten Server für ein vorgegebenes Zeitintervall.

Da bei Ausfall oder Überlastung des ausgewählten Servers keine Bestätigungsmeldung über dessen Verfügbarkeit versendet wird, wird überprüft, ob der ausgewählte Server zumindest in der Lage ist, mit einer Nichtverfügbarkeitsmeldung auf die Verfügbarkeitsanfrage zu reagieren (Schritt 209). Bei einer Überlastung des ausgewählten Servers wäre dies beispielsweise noch möglich. Dagegen ist bei einem Ausfall des ausgewählten Servers nicht mehr mit einem Versenden einer Nichtverfügbarkeitsmeldung zu rechnen. Daher wird überprüft ob ein Zeitlimit für den Empfang einer Bestätigungsmeldung oder einer Nichtverfügbarkeitsmeldung erreicht wird (Schritt 211). Wird dieses Zeitlimit überschritten, so übermittelt der anfragende Client eine Multicast-Meldung über die Nichtverfügbarkeit des ausgewählten Servers an sämtliche Clients innerhalb desselben Teilnetzes (Schritt 210). In entsprechender Weise wird verfahren, wenn der anfragende Client innerhalb des für eine Anwort auf die Verfügbarkeitsanfrage zulässigen Zeitlimits eine Nichtverfügbarkeitsmeldung erhält.

Das beschriebene Verfahren zur Überprüfung der Verfügbarkeit eines Servers wird vorzugsweise durch ein Steuerungsprogramm implementiert, das in einen Arbeitsspeicher eines Clients ladbar ist und zumindest einen Code-Abschnitt aufweist, bei dessen Ausführung die vorangehend beschriebenen Schritte Übermitteln der Verfügbarkeitsanfrage, Überwachen des Empfangs einer Bestätigungsmeldung, Übermitteln einer Meldung über die Verfügbarkeit an weitere Clients, Überwachen des Empfangs von Meldungen weiterer Clients und ggf. Unterbinden des Versendens von Verfügbarkeitsanfragen ablaufen. Mittels des Steuerungsprogramms wird ein Client für ein verbindungslose Dienste bereitstellendes Kommunikationsnetz implementiert, der eine Einrichtung zum Übermitteln von Verfügbarkeitsanfragen, eine Einrichtung zur Überwachung des Empfangs von Bestätigungsmeldungen, eine Einrichtung zur Übermittlung von Meldungen über die Verfügbarkeit von Servern an weitere Clients sowie eine Einrichtung zur Überwachung des Empfangs von Meldungen weiterer Clients und zum Unterbinden des Übermittelns von Verfügbarkeitsanfragen aufweist.

Die nachfolgenden Betrachtungen dienen einer Herleitung der Vorteile des beschriebenen Verfahrens zur Überprüfung der Verfügbarkeit eines Servers gegenüber bisher gängigen Keep-Alive-Tests. Entsprechend den bisher gängigen Keep-Alive-Tests würde ein Server bei n=1000 Verfügbarkeitsanfragen sendenden Clients und einer Anfragerate von a=3 Anfragen pro Minute und Client sowie unter der Annahme einer zeitlichen Gleichverteilung derartiger Anfragen alle

$$t_r(a=3, n=1000) = \frac{60s}{a \cdot n} \approx \frac{60s}{3 \cdot 1000} = 20ms$$

eine Verfügbarkeitsanfrage zu beantworten haben.

Der Server wäre also durchschnittlich alle 20 ms damit beschäftigt, eine Verfügbarkeitsanfrage zeitnah zu beantworten. Dies würde zu einer erheblichen Belastung des Servers durch Verfügbarkeitsanfragen führen, was ihn in der Wahrnehmung seiner ihm eigentlich zugedachten Aufgaben stark einschränken würde. Zur Lösung dieses Problems würde sich zunächst anbieten, die Anfragerate der Clients pro Minute stark zu reduzieren, was jedoch zur Folge hätte, daß die betroffenen Clients den Verlust der Verfügbarkeit des Server unter Umständen unzureichend spät feststellen.

Für eine Abschätzung einer mit dem hier vorgeschlagenen Verfahren erzielbaren Vorteile wird zunächst angenommen, daß sich n Clients auf s Teilnetze verteilen. Ferner wird angenommen, daß aus jedem dieser s Teilnetze wenigstens ein Client versuchen wird, die Verfügbarkeit des Servers abzufragen. Jeder dieser Clienst würde dann wiederum die übrigen Clients innerhalb seines Teilnetzes mittels einer Multicast-Meldung über die Serververfügbarkeit informieren. Unter idealisierten Bedingungen würde die Anzahl der durch den Server zu bearbeitenden Verfügbarkeitsanfragen der Anzahl s der Teilnetze entsprechen. Zusätzlich ist noch zu berücksichtigen, daß die Multicast-Meldungen in den Teilnetzen eine Verlustrate v zwischen 0 und 100 Prozent aufweisen können. Damit ist die Anzahl $v_C$ von Clients pro Teilnetz, die von einer Multicast-Meldung nicht erreicht werden und somit selber eine Verfügbarkeitsanfrage an den Server senden abhängig von der Verlustrate v der Multicast-Meldungen:

$$v_c = v\left(\frac{n}{s} - 1\right).$$

Die Gesamtzahl $v_C^{all}$ aller Clients, die unter dieser Voraussetzung tatsächlich eine Verfügbarkeitsanfrage an den Server richten läßt sich damit wie folgt abschätzen:

$$v_c^{all} = s \cdot v \cdot \left(\frac{n}{s} - 1\right) + s = v \cdot n - v \cdot s + s = v \cdot n + s(1 - v) \;.$$

Unter diesen Annahmen kann das Zeitintervall $t_r$ zwischen zwei an den Server gerichteten Verfügbarkeitsanfragen wie folgt berechnet werden:

$$t_r(a, n, s, v) = \frac{60s}{a \cdot (v \cdot n + s(1 - v))} \;.$$

Anhand eines Zahlenbeispiels wird die Belastung des Servers durch Verfügbarkeitsanfragen bei bisher gängigen Keep-Alive-Tests der Belastung des Servers entsprechend dem hier vorgeschlagenen Verfahrens gegenüber gestellt. Bei einer Anfragerate von a=3 Verfügbarkeitsanfragen pro Minute und n=1000 Clients gilt für das Zeitintervall $t_r$ zwischen zwei Verfügbarkeitsanfragen:

$$t_r(a = 3, n = 1000, s, v) = \frac{60s}{3 \cdot (v \cdot 1000 + s(1 - v))} = \frac{20s}{1000 \cdot v + s(1 - v)} \;.$$

Typische Werte für die Verlustrate v liegen deutlich unter 100 Prozent. Mit den obigen Werten für die Anfragerate a, die Anzahl n der Clients und s=10 Teilnetzen ergeben sich in Abhängigkeit von der Verlustrate v die folgenden Effizienzsteigerungen $d_{eff}$ in Prozent bezogen auf die gängigen Keep-Alive-Tests mit einem Zeitintervall $t_r$ = 20 ms zwischen zwei Verfügbarkeitsanfragen:

| v | 0.0 | 0.1 | 0.2 | 0.5 | 0.8 |
|---|---|---|---|---|---|
| $t_r$[ms] | 2000 | 183 | 96 | 40 | 25 |
| $d_{eff}$[%] | 9900 | 815 | 380 | 100 | 25 |

Bei einer Verlustrate v = 20 % beträgt die mittlere Zeit $t_r$ zwischen zwei durch den Server zu bearbeitende Verfügbarkeitsanfragen beispielsweise ca. 96 ms. Dies entspricht einer Effizienzsteigerung $d_{eff}$ = 380 % im Vergleich zu bisher gängigen Keep-Alive-Tests.

Insgesamt ist festzustellen, daß bei dem hier vorgeschlagenen Verfahren zur Überprüfung der Serververfügbarkeit die Belastung des Servers durch eine Beantwortung von Verfügbarkeitsanfragen deutlich sinkt, ohne daß dies zu einer signifikanten Erhöhung der Zeit führt, bis den Clients die Nichtverfügbarkeit des Servers bekannt wird. Außerdem sind zur Implementierung des hier vorgeschlagenen Verfahrens lediglich auf Seiten der Clients Änderungen notwendig. Die bisherige Vorgehensweise zur Bearbeitung von Verfügbarkeitsanfragen kann auf Serverseite beibehalten werden und erfordert damit keine weiteren Aufwendungen.

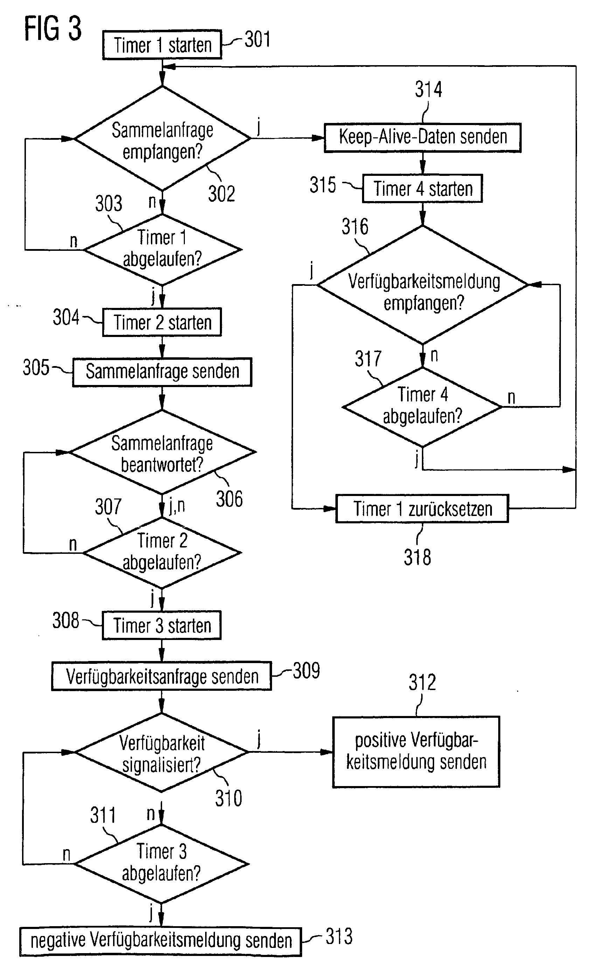

Bei dem in Figur 3 dargestellten Verfahren wird zusätzlich die Verfügbarkeit von Clients durch einen Server überprüft. Dies bedeutet, daß ein Server auch über die Verfügbarkeit von Clients informiert ist, die lediglich von einen anderen Client per Multicast-Meldung über die Verfügbarkeit des Servers informiert werden und nicht selber Keep-Alive-Anfragen direkt an den Server richten. Zunächst startet jeder Client einen erster Timer (Timer 1) (Schritt 301) und überprüft, ob eine Multicast-Sammelanfrage empfangen wurde (Schritt 302). Eine Multicast-Sammelanfrage kann von einem Client als Zeichen dafür ausgesendet werden, daß dieser Client einen Sammel-Keep-Alive-Test mit einem Server durchführen möchte, und daß dieser Client dafür die Keep-Alive-Daten anderer Clients benötigt.

Der Zustand des ersten Timers wird fortlaufend durch den jeweiligen Client überprüft (Schritt 303). Sollte der erste Timer noch nicht abgelaufen und keine Multicast-Sammelanfrage eingegangen sein, so wird der Empfang einer Multicast-Sammelanfrage weiter überwacht. Ist der erste Timer abgelaufen und keine Multicast-Sammelanfrage empfangen worden, so übernimmt der jeweilige Client die Aufgabe, selber eine Multicast-Sammelanfrage an einen ausgewählten Server zu richten. Dazu startet der jeweilige anfragende Client einen zweiten Timer (Timer 2) (Schritt 304) und übermittelt eine Multicast-Sammelanfrage an vorgebbare weitere Clients (Schritt 305). Nachfolgend überprüft der jeweilige anfragende Client, ob die Multicast-Sammelanfrage von den vorgebbaren weiteren Clients beantwortet wurde (Schritt 306), und ob der zweite Timer abgelaufen ist (Schritt 307). Sollte der zweite Timer noch nicht abgelaufen und keine Antwort auf die Multicast-Sammelanfrage eingegangen sein, so wird der Empfang einer Antwort auf die Multicast-Sammelanfrage weiter überwacht.

Nach Ablauf des zweiten Timers startet der jeweilige anfragende Client einen dritten Timer (Timer 3) (Schritt 308) und sendet eine Sammel-Verfügbarkeitsanfrage an den ausgewählten Server (Schritt 309). Die Sammel-Verfügbarkeitsanfrage umfaßt Daten des jeweiligen anfragenden Clients und derjenigen vorgebbaren weiteren Clients, die bis zum Ablauf des zweiten Timers auf die Multicast-Sammelanfrage des jeweiligen anfragenden Clients geantwortet haben. Nachfolgend überprüft der jeweilige anfragende Client, ob der ausgewählte Server Verfügbarkeit signalisiert hat (Schritt 310), und ob der dritte Timer abgelaufen ist (Schritt 311). Sollte der dritte Timer noch nicht abgelaufen und keine Antwort auf die Sammel-Verfügbarkeitsanfrage eingegangen sein, so wird der Empfang einer Antwort auf die Sammel-Verfügbarkeitsanfrage weiter überwacht.

Hat der ausgewählte Server seine Verfügbarkeit dem jeweiligen anfragenden Client signalisiert, so übermittelt der jeweilige anfragende Client eine positive Multicast-Verfügbarkeitsmeldung an die vorgebbaren weiteren Clients (Schritt 312). Sollte der ausgewählte Server seine Nichtverfügbarkeit signalisiert oder bis zum Ablauf des dritten Timers keine Antwort auf die Sammel-Verfügbarkeitsanfrage gesendet haben, so übermittelt der jeweilige anfragende Client eine negative Multicast-Verfügbarkeitsmeldung an die vorgebbaren weiteren Clients (Schritt 313).

Vorgebbare weitere Clients, die entsprechend der Überprüfung in Schritt 302 eine Multicast-Sammelanfrage empfangen haben, übermitteln ihre Keep-Alive-Daten an den jeweiligen anfragenden Client (Schritt 314), deren Empfang der jeweilige anfragende Client entsprechend Schritt 306 überprüft. Nachfolgend starten die vorgebbaren weiteren Clients einen vierten Timer (Timer 4) (Schritt 315) und überprüfen, ob eine positive oder negative Multicast-Verfügbarkeitsmeldung des jeweiligen anfragenden Clients empfangen wurde (Schritt 316), und ob der vierte Timer abgelaufen ist (Schritt 317). Bei Empfang einer Multicast-Verfügbarkeitsmeldung des jeweiligen anfragenden Clients wird der erste Timer zurückgesetzt (Schritt 318), so daß die vorgebbaren weiteren Clients für eine durch den Ablauf des ersten Timers bestimmte Zeitdauer keine Verfügbarakeitsanfragen an den ausgewählten Server richten.

Solange der vierte Timer nicht abgelaufen ist, warten die vorgebbaren weiteren Clients auf eine Multicast-Verfügbarkeitsmeldung des jeweiligen anfragenden Clients. Sollte dies nicht vor Ablauf des vierten Timers geschehen, übernimmt der jeweilige Client nun selbst eine Rolle als Steller einer Sammel-Verfügbarkeitsanfrage entsprechend den Schritten 304 bis 313, sofern der erste Timer abgelaufen ist bzw. vor seinem Ablauf keine weitere Multicast-Sammelanfrage eingeht.

Die Anwendung der vorliegenden Erfindung ist nicht auf das hier beschriebene Ausführungsbeispiel beschränkt.

**Patentansprüche**

1. Verfahren zur Überprüfung der Verfügbarkeit eines Servers (102, 103, 104), bei dem

- eine Verfügbarkeitsanfrage von einem Client (111-115, 121-123, 131-133) an einen Server übermittelt wird,
- die Verfügbarkeitsanfrage bei Verfügbarkeit des Servers durch eine vom Server an den Client übermittelte Bestätigungsmeldung beantwortet wird,

**dadurch gekennzeichnet, daß** der Client eine Meldung über die Verfügbarkeit des Servers an weitere Clients übermittelt, die daraufhin jeweils ein Übermitteln einer Verfügbarkeitsanfrage an den Server zumindest für ein vorgebbares Zeitintervall unterbinden.

2. Verfahren nach Anspruch 1,
**dadurch gekennzeichnet, daß** Daten zwischen dem Server und den Clients mittels verbindungsloser Vermittlungssteuerung übermittelt werden.

3. Verfahren nach einem der Ansprüche 1 oder 2,
**dadurch gekennzeichnet, daß** die Meldung über die Verfügbarkeit des Servers an die vorgebbaren weiteren Clients mittels Multicast übermittelt wird.

4. Verfahren nach einem der Ansprüche 1 bis 3,
**dadurch gekennzeichnet, daß** der Client nur vorgebbare weitere Clients innerhalb desselben Teilnetzes über die Verfügbarkeit des Servers informiert.

5. Verfahren nach einem der Ansprüche 1 bis 4,
**dadurch gekennzeichnet, daß** der Client zu durch eine Zeitsteuerung vorgegebenen Zeitpunkten Verfügbarkeitsanfragen ausführt.

**6.** Verfahren nach Anspruch 5,
**dadurch gekennzeichnet, daß** jeweils ein Zähler einer Zeitsteuerung, die einem vorgebbaren weiteren Client zugeordnet ist und Verfügbarkeitsanfragen veranlaßt, bei Empfang einer Meldung über die Verfügbarkeit des Servers auf einen vorgebbaren Wert zurückgesetzt wird.

**7.** Steuerungsprogramm, das in einen Arbeitsspeicher eines Clients (111-115, 121-123, 131-133) ladbar ist und zumindest einen Codeabschnitt aufweist, bei dessen Ausführung

- eine Verfügbarkeitsanfrage von dem Client an einen Server (102, 103, 104) übermittelt wird,
- ein Empfang einer die Verfügbarkeitsanfrage bei Verfügbarkeit des Servers beantwortenden Bestätigungsmeldung überwacht wird,
- eine Meldung über die Verfügbarkeit des Servers an weitere Clients übermittelt wird,
- ein Empfang einer Meldung eines vorgebbaren weiteren Clients über die Verfügbarkeit des Servers überwacht und ein Übermitteln einer Verfügbarkeitsanfrage an den Server zumindest für ein vorgebbares Zeitintervall bei Empfang einer solchen Meldung unterbunden wird,

wenn das Steuerungsprogramm in dem Client abläuft.

**8.** Client (111-115, 121-123, 131-133) für ein verbindungslose Dienste bereitstellendes Kommunikationsnetz mit

- einer Einrichtung zum Übermitteln einer Verfügbarkeitsanfrage an einen Server (102, 103, 104),
- einer Einrichtung zur Überwachung eines Empfangs einer die Verfügbarkeitsanfrage bei Verfügbarkeit des Servers beantwortenden Bestätigungsmeldung,
- einer Einrichtung zur Übermittlung einer Meldung über die Verfügbarkeit des Servers an weitere Clients,
- einer Einrichtung zur Überwachung eines Empfangs einer Meldung eines vorgebbaren weiteren Clients über die Verfügbarkeit des Servers und zum Unterbinden eines Übermittelns einer Verfügbarkeitsanfrage an den Server zumindest für ein vorgebbares Zeitintervall bei Empfang einer solchen Meldung.

**Claims**

**1.** Method for checking the availability of a server (102, 103, 104), in which

- an availability request is transmitted from a client (111-115, 121-123, 131-133) to a server,
- the availability request is answered by a confirmation message transmitted from the server to the client if the server is available,

**characterized in that** the client transmits a message about the availability of the server to further clients which then respectively prevent transmission of an availability request to the server at least for a prescribable time interval.

**2.** Method according to Claim 1,
**characterized in that** data are transmitted between the server and the clients by means of connectionless switching control.

**3.** Method according to one of Claims 1 and 2,
**characterized in that** the message about the availability of the server is transmitted to the prescribable further clients by means of multicast.

**4.** Method according to one of Claims 1 to 3,
**characterized in that** the client informs only prescribable further clients within the same subnetwork about the availability of the server.

**5.** Method according to one of Claims 1 to 4,
**characterized in that** the client makes availability requests at times prescribed by a time controller.

**6.** Method according to Claim 5,
**characterized in that** a respective counter in a time controller which is associated with a prescribable further client and prompts availability requests is reset to a prescribable value upon reception of a message about the availability of the server.

7. Control program which can be loaded into a main memory in a client (111-115, 121-123, 131-133) and has at least one code section, which, when executed, prompts

- an availability request to be transmitted from the client to a server (102, 103, 104),
- reception of a confirmation message answering the availability request when the server is available to be monitored,
- a message about the availability of the server to be transmitted to further clients,
- reception of a message from a prescribable further client about the availability of the server to be monitored, and transmission of an availability request to the server to be prevented at least for a prescribable time interval upon reception of such a message,

when the control program is executed in the client.

8. Client (111-115, 121-123, 131-133) for a communication network providing connectionless services, having

- a device for transmitting an availability request to a server (102, 103, 104),
- a device for monitoring reception of a confirmation message answering the availability request when the server is available,
- a device for transmitting a message about the availability of the server to further clients,
- a device for monitoring reception of a message from a prescribable further client about the availability of the server and for preventing transmission of an availability request to the server at least for a prescribable time interval upon reception of such a message.

**Revendications**

1. Procédé de contrôle de la disponibilité d'un serveur ( 102, 103, 104 ) dans lequel
   on transmet une interrogation de disponibilité d'un client ( 111 à 115, 121 à 123, 131 à 133 ) à un serveur,
   il est répondu à la question de la disponibilité si le serveur est disponible par un message de confirmation transmis du serveur au client,
   **caractérisé en ce que** le client transmet un message sur la disponibilité du serveur à d'autres clients qui, ensuite, suppriment, au moins pendant un intervalle de temps pouvant être prescrit, une transmission d'une interrogation de disponibilité au serveur.

2. Procédé suivant la revendication 1,
   **caractérisé en ce que** l'on transmet des données entre le serveur et le client au moyen d'une commande de transmission sans fil.

3. Procédé suivant l'une des revendications 1 ou 2,
   **caractérisé en ce que** l'on transmet le message sur la disponibilité du serveur aux autres clients pouvant être prescrits au moyen de Multicast.

4. Procédé suivant l'une des revendications 1 à 3,
   **caractérisé en ce que** le client n'informe de la disponibilité du serveur que d'autres clients pouvant être prescrits au sein du même sous-réseau.

5. Procédé suivant l'une des revendications 1 à 4,
   **caractérisé en ce que** le client exécute des interrogations de disponibilité à des instants prescrits par une commande temporelle.

6. Procédé suivant la revendication 5,
   **caractérisé en ce que,** respectivement, un compteur de commande temporelle, qui est associé à un autre client qui peut être prescrit et qui provoque des interrogations de disponibilité, est remis à une valeur pouvant être prescrite à réception d'un message sur la disponibilité du serveur.

7. Programme de commande, qui peut être chargé dans une mémoire de travail d'un client ( 111 à 115, 121 à 123, 131 à 133 ) et qui a au moins une section de code, dans la réalisation duquel
une interrogation de disponibilité est transmise du client à un serveur ( 102, 103, 104 ),
une réception d'un message de confirmation répondant à l'interrogation de disponibilité lorsque le serveur est disponible est surveillée,
un message sur la disponibilité du serveur est transmis à d'autres clients,
une réception d'un message d'un autre client pouvant être prescrit sur la disponibilité du serveur est surveillée et
une transmission d'une interrogation de disponibilité au serveur est supprimée, au moins pendant un intervalle de temps pouvant être prescrit, à réception d'un message de ce genre,
lorsque le programme de commande se déroule chez le client.

8. Client ( 111 à 115, 121 à 123, 131 à 133 ) pour un réseau de communications mettant à disposition des services sans fil comprenant
un dispositif de transmission d'une interrogation de disponibilité à un serveur ( 102, 103, 104 ),
un dispositif de surveillance d'une réception d'un message de confirmation répondant à l'interrogation de disponibilité lorsque le serveur est disponible,
un dispositif de transmission d'un message sur la disponibilité du serveur à d'autres clients,
un dispositif de surveillance d'une réception d'un message d'un autre client pouvant être prescrit sur la disponibilité du serveur et de suppression d'une transmission d'une interrogation de disponibilité au serveur, au moins pendant un intervalle de temps pouvant être prescrit, à réception d'un message de ce genre.

# FIG 1

EP 1 668 866 B1

## FIG 2

201 — Timer starten

202 — Multicast-Meldung?
- n → 203
- j → Timer zurücksetzen — 208

203 — Timer ab-gelaufen?
- n
- j → Verfügungsanfrage senden — 204

205 — Server verfügbar?
- j → Bestätigungsmeldung senden — 206
- n → negative Meldung? — 209

Bestätigungsmeldung senden — 206 → Multicast-Meldung über Server-Verfüg-barkeit senden — 207

negative Meldung? — 209
- j
- n → Zeitlimit erreicht? — 211

211 — Zeitlimit erreicht?
- j
- n

210 — Multicast-Meldung über Server-Nicht-Verfügbarkeit senden

**FIG 3**

Timer 1 starten — 301

Sammelanfrage empfangen? — 302 —j→ Keep-Alive-Daten senden — 314

n

303 — Timer 1 abgelaufen?

n →

j

304 — Timer 2 starten

305 — Sammelanfrage senden

315 — Timer 4 starten

316 — Verfügbarkeitsmeldung empfangen?

j

317 — Timer 4 abgelaufen? —n→

n

Sammelanfrage beantwortet? — 306

j,n

307 — Timer 2 abgelaufen?

n →

j

308 — Timer 3 starten

Timer 1 zurücksetzen — 318

309 — Verfügbarkeitsanfrage senden

312 — positive Verfügbarkeitsmeldung senden

Verfügbarkeit signalisiert? — 310 —j→

n

311 — Timer 3 abgelaufen?

n →

j

negative Verfügbarkeitsmeldung senden — 313

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2001054158 A